# EUROPEAN PATENT APPLICATION

(11) **EP 4 484 024 A1**
(43) Date of publication of application: **01.01.2025**
(21) Application number: 22958335.6
(22) Date of filing: 13.09.2022
(51) Int. Cl.: B05D 1/26, B05C 5/02, B05C 11/10

(54) **COATING DIE HEAD, COATING APPARATUS AND COATING METHOD**

(71) Applicant: Contemporary Amperex Technology Co., Limited, Fujian 352100 (CN)
(72) Inventor: WANG, Xing, Ningde City, Fujian 352100 (CN); SHANG, Hongwu, Ningde City, Fujian 352100 (CN); ZHENG, Tuo, Ningde City, Fujian 352100 (CN); LI, Shisong, Ningde City, Fujian 352100 (CN); YAN, Xiaokang, Ningde City, Fujian 352100 (CN); GAO, Xiaoliang, Ningde City, Fujian 352100 (CN); CHE, Huan, Ningde City, Fujian 352100 (CN); KANG, Xuefeng, Ningde City, Fujian 352100 (CN)
(74) Representative: Kraus & Lederer PartGmbB
(86) International application number: PCT/CN2022/118314
(87) International publication number: WO 2024/055140

(57) **Abstract**

The present application provides a coating die, a coating device and a coating method. The coating die includes a first die and a second die, the first die is connected to the second die and enclosed to form a slot to output slurry; the first die includes a die body, a lip portion and a lip adjustment assembly; the lip portion is connected to the die body and is located at a discharge end of the slot; the lip adjustment assembly is used for adjusting a temperature of the lip portion to control a deformation of the lip portion. The solution of the present application can improve the consistency of coating.

## Description

### TECHNICAL FIELD

The present application relates to the technical field of coating, in particular to a coating die, a coating device and a coating method.

### BACKGROUND

With the increasing environmental pollution, people pay more and more attention to the new energy industry. In the new energy industry, battery technology is an important factor related to its development.

The development of battery technology requires the consideration of various design factors, such as energy density, cycle life, safety performance and so on. Coating is a critical step in the production of battery plate. The coating quality affects the consistency of plates, and further affects the capacity, cycle performance and ratio of batteries. Therefore, how to provide a coating die to improve the consistency of coating is an urgent technical problem to be solved.

### SUMMARY

The present application provides a coating die, a coating device and a coating method, which can improve the consistency of coating.

In the first aspect, a coating die is provided, which includes a first die and a second die, the first die is connected to the second die and enclosed to form a slot to output slurry; the first die includes a die body, a lip portion and a lip adjustment assembly; the lip portion is connected to the die body and is located at a discharge end of the slot; and the lip adjustment assembly is used for adjusting a temperature of the lip portion to control a deformation of the lip portion.

In the embodiments of the present application, the coating die includes the first die and the second die, the first die and the second die are connected and enclosed to form a slot to output slurry. The first die includes a die body, a lip portion and a lip adjustment assembly, the lip portion is connected to the die body and is located at a discharge end of the slot, and the lip adjustment assembly is used for adjusting the temperature of the lip portion to control the deformation of the lip portion. When the temperature of the lip portion changes, the lip portion may expand or contract, so that the lip portion is deformable. In the coating process using the coating die, the temperature of the lip portion can be adjusted by the lip adjustment assembly to control the deformation of the lip portion, thereby adjusting the gap between the lip portion and the coated substrate. The gap between the lip portion and the coated substrate is related to the weight and thickness of the coating. The weight and thickness of the coating can be adjusted by adjusting a distance between the lip portion and the substrate, which is beneficial to improving the consistency of the coating.

In a possible implementation, the lip adjustment assembly includes a temperature control element, the temperature control element being disposed on a surface of the lip portion and configured to adjust the temperature of the lip portion. In this way, it is convenient to adjust the temperature of the lip portion by the temperature control element to control the deformation of the lip portion. Compared with manually adjusting the deformation of the lip portion, this implementation is beneficial to improve the automation and the deformation accuracy of lip portion.

In a possible implementation, the temperature control element includes a plurality of temperature control units arranged in a first direction, the plurality of temperature control units are configured to adjust temperatures of a plurality of areas of the lip portion, and the first direction is a width direction of the substrate being coated. By arranging a plurality of temperature control units, the temperature of a specific area of the lip portion can be flexibly adjusted as required, so as to control the deformation of the specific area of the lip portion. In addition, it is also beneficial to the maintenance and replacement of the temperature control element.

In a possible implementation, the temperature control element is a semiconductor temperature control element. The semiconductor temperature control element has a short heating and cooling response time and has high adjustment accuracy for quickly and accurately controlling the deformation of the lip portion.

In a possible implementation, the lip adjustment assembly further includes a temperature measurement sensor, the temperature measurement sensor being connected to the temperature control element to measure a temperature of the temperature control element. This facilitates determining whether the temperature control element should be warmed up or cooled down based on the temperature of the temperature control element as measured by the temperature measurement sensor.

In the second aspect, there is provided a coating device including the coating die of either the first aspect or the implementation thereof, a coating measurement unit and a control unit; the coating measurement unit is configured to measure coating information of a coated area of a substrate being coated and send the coating information to the control unit; and the control unit is configured to control a lip adjustment assembly to adjust a temperature of the lip portion according to the coating information. Thus, the thickness, width and consistency of the coating can be determined according to the coating information of the coated area, so that the lip adjustment assembly can be controlled to adjust the temperature of the lip portion according to the coating information, so as to control the deformation of the lip portion.

In a possible implementation, the coating device further includes a back roller, the back roller being configured to support the substrate for coating the substrate by the coating die; the control unit is further configured to: control, under a condition that the coating information is less than first preset information, the lip adjustment assembly to cool the lip portion, so that the lip portion contracts to increase a gap between the lip portion and the back roller; and control, under a condition that the coating information is greater than the first preset information, the lip adjustment assembly to heat the lip portion, so that the lip portion expands to reduce the gap between the lip portion and the back roller. In this way, by comparing the coating information with the first preset information, the condition of the coating can be determined so as to facilitate timely adjustment of the coating strategy.

In the third aspect, there is provided a coating method applied to a coating device, the coating device includes the coating die of either the first aspect or the implementation thereof, the method includes: acquiring coating information of a coated area of a substrate being coated; and controlling the lip adjustment assembly to adjust a temperature of the lip portion according to the coating information. Thus, the thickness, width and consistency of the coating can be determined according to the coating information of the coated area, so that the lip adjustment assembly can be controlled to adjust the temperature of the lip portion according to the coating information, so as to control the deformation of the lip portion.

In a possible implementation, the controlling the lip adjustment assembly to adjust a temperature of the lip portion according to the coating information includes: controlling, under a condition that the coating information is less than first preset information, the lip adjustment assembly to cool the lip portion, so that the lip portion contracts to increase a gap between the lip portion and a back roller supporting the substrate; and controlling, under a condition that the coating information is greater than the first preset information, the lip adjustment assembly to heat the lip portion, so that the lip portion expands to reduce the gap between the lip portion and the back roller. In this way, by comparing the coating information with the first preset information, the condition of the coating can be determined so as to facilitate timely adjustment of the coating strategy.

In a possible implementation, the controlling the lip adjustment assembly to adjust a temperature of the lip portion according to the coating information includes: controlling a temperature control element of the lip adjustment assembly to adjust the temperature of the lip portion according to the coating information. In this way, the temperature of the lip portion is easily adjusted through the temperature control element according to the coating information, which is beneficial to improving automation.

In a possible implementation, the controlling the lip adjustment assembly to adjust a temperature of the lip portion according to the coating information includes: controlling a first temperature control unit of a plurality of temperature control units of the temperature control element to adjust a temperature of a first area of a plurality of areas of the lip portion according to the coating information, the plurality of temperature control units being arranged in a first direction, the first direction being a width direction of the substrate being coated. In this way, the temperature of a certain area of the lip portion can be flexibly adjusted by the temperature control unit, thereby achieving the deformation of the certain area of the lip portion.

In a possible implementation, the temperature control element is a semiconductor temperature control element; and the controlling the lip adjustment assembly to adjust a temperature of the lip portion according to the coating information includes: adjusting a current of the semiconductor temperature control element based on a proportion-integral-derivative algorithm according to the coating information, so as to adjust the temperature of the lip portion. Since the semiconductor temperature control element has a short heating and cooling response time and has high adjustment accuracy, the deformation of lip portion can be controlled quickly and accurately by using the semiconductor temperature control element.

In a possible implementation, prior to the controlling the lip adjustment assembly to adjust a temperature of the lip portion according to the coating information, the method further includes: acquiring a temperature of the temperature control element. This facilitates determining whether the current temperature control element should be warmed up or cooled down according to the current temperature of the temperature control element.

In a possible implementation, the coating information includes at least one of a coating thickness, a coating width and a coating weight of the coated area. This facilitates the measurement of the coating information by the measuring device, thereby facilitating the acquisition of the coating information.

In the fourth aspect, there is provided a coating device including: a memory for storing computer-executable instructions; and a processor for accessing the memory and executing the computer-executable instructions to perform operations in the method according to either the second aspect or the possible implementations thereof.

In the fifth aspect, there is provided a storage medium for storing a computer program which, when being executed by a computing device, causes the computing device to implement the method of either the second aspect or the possible implementations thereof.

In the embodiments of the present application, the coating die includes the first die and the second die, the first die and the second die are connected and enclosed to form a slot to output slurry. The first die includes a die body, a lip portion and a lip adjustment assembly, the lip portion is connected to the die body and is located at a discharge end of the slot, and the lip adjustment assembly is used for adjusting the temperature of the lip portion to control the deformation of the lip portion. When the temperature of the lip portion changes, the lip portion may expand or contact, so that the lip portion is deformable. In the coating process using the coating die, the temperature of the lip portion can be adjusted by the lip adjustment assembly to control the deformation of the lip portion, thereby adjusting the gap between the lip portion and the coated substrate. The gap between the lip portion and the coated substrate is related to the weight and thickness of the coating. The weight and thickness of the coating can be adjusted by adjusting a distance between the lip portion and the substrate, which is beneficial to improving the consistency of the coating.

### BRIEF DESCRIPTION OF DRAWINGS

In order to more clearly illustrate under the technical solutions in embodiments of the present application, the following will briefly introduce the drawings that are desired to be used in the description of the embodiments. Obviously, the drawings in the following description are merely some embodiments of the present application, from which other drawings may be obtained without exerting inventive effort by those ordinarily skilled in the art.
FIG. 1 is a schematic diagram of a coating die according to an embodiment of the present application;
FIG. 2 is a schematic diagram of a first die according to an embodiment of the present application;
FIG. 3 is a schematic diagram of coating using the coating die according to an embodiment of the present application;
FIG. 4 is a schematic diagram of coating according to an embodiment of the present application;
FIG. 5 is a schematic diagram of the coating die according to an embodiment of the present application;
FIG. 6 is a side view of the first die according to an embodiment of the present application;
FIG. 7 is a schematic diagram of the first die according to an embodiment of the present application;
FIG. 8 is a top view of the first die according to an embodiment of the present application;
FIG. 9 is a schematic diagram of a lip adjustment assembly according to an embodiment of the present application;
FIG. 10 is a schematic diagram of a coating device according to an embodiment of the present application;
FIG. 11 is a schematic diagram of the coating device according to an embodiment of the present application;
FIG. 12 is a schematic diagram of a coating method according to an embodiment of the present application;
FIG. 13 is a flowchart of the coating method according to an embodiment of the present application;
FIG. 14 is a schematic diagram of the coating device according to an embodiment of the present application.

In the drawings, the drawings are not drawn to actual scale.

### DESCRIPTION OF THE EMBODIMENTS

Embodiments of the present application are described in further detail below with reference to the accompanying drawings and embodiments. Detailed description of the following embodiments and accompanying drawings are configured to illustratively state the principles of the present application, but not to limit the scope of the present application, that is, the present application is not limited to the embodiments described.

In the description of the present application, it should be noted that, unless otherwise noted, "a plurality of" means two or more; orientation o positional relationships indicated by the terms "upper", "lower", "left", "right", "inner", "outer", and the like are only for the convenience of description of the present application and simplification of description rather than indicating or implying that the referenced device or element must have a particular orientation, be constructed and operated in a particular orientation, and thus are not to be construed as limiting the present application. In addition, the terms "first", "second", "third", and the like are used for descriptive purposes only and are not to be construed as indicating or implying relative importance. "Vertical" is not strictly vertical, but within the allowable range of error. "Parallel" is not strictly parallel, but within the allowable range of error.

Orientation words appearing in the following description are all directions shown in the drawings and do not limit the specific structure of the present application. In the description of the present application, it should also be noted that, unless otherwise expressly specified and limited, the terms "mounted", "connected" and "attached" should be understood in a broad sense, for example, it can be "fixedly connected" or "detachably connected", or "integrally connected"; it can be "directly connected" or "indirectly connected through an intermediate medium". The specific meanings of the above terms in the present application may be understood by those of ordinary skill in the art depending on specific circumstances.

The term "and/or" in the present application is simply a description of the association relationship of the associated objects, indicating that there may be three relationships, for example, A and/or B may indicate that A exists alone, A and B exist at the same time, and B exists alone. In addition, the character "/" in the present application generally means that the associated objects are in an "or" relationship.

With the development of battery technology, the requirements for batteries are getting higher and higher. Coating is an essential process in the production of batteries, and it is also a critical process affecting the safety, capacity and consistency of batteries. In the coating process, the slurry is extruded and sprayed onto the substrate along the gap of the coating die under a certain pressure to finish the coating of the substrate.

Researchers found that the coating thickness of the existing coating die is adjusted by adjusting the distance between the lip portion of the die and the substrate. However, the adjustment of the distance between the lip portion and the substrate in the existing art is usually implemented by adjusting a mechanical assembly, such as a screw assembly, provided on the coating die. This adjustment method has low adjustment accuracy, long response time and poor stability, which makes it difficult to meet the coating requirements.

Based on this, the present application provides a coating die, the coating die includes a first die and a second die, the first die and the second die are connected and enclosed to form a slot to output slurry. The first coating die includes a die body, a lip portion and a lip adjustment assembly, the lip portion is connected to the die body and is located at a discharge end of the slot, and the lip adjustment assembly is used for adjusting the temperature of the lip portion to control the deformation of the lip portion. In this way, when the temperature of the lip portion changes, the lip portion may expand or contract, so that the lip portion is deformable. In the coating process using the coating die, the temperature of the lip portion can be adjusted by the lip adjustment assembly to control the deformation of the lip portion, thereby adjusting the gap between the lip portion and the coated substrate. The gap between the lip portion and the coated substrate is related to the weight and thickness of the coating. The weight and thickness of the coating can be adjusted by adjusting a distance between the lip portion and the substrate, which is beneficial to improving the consistency of the coating.

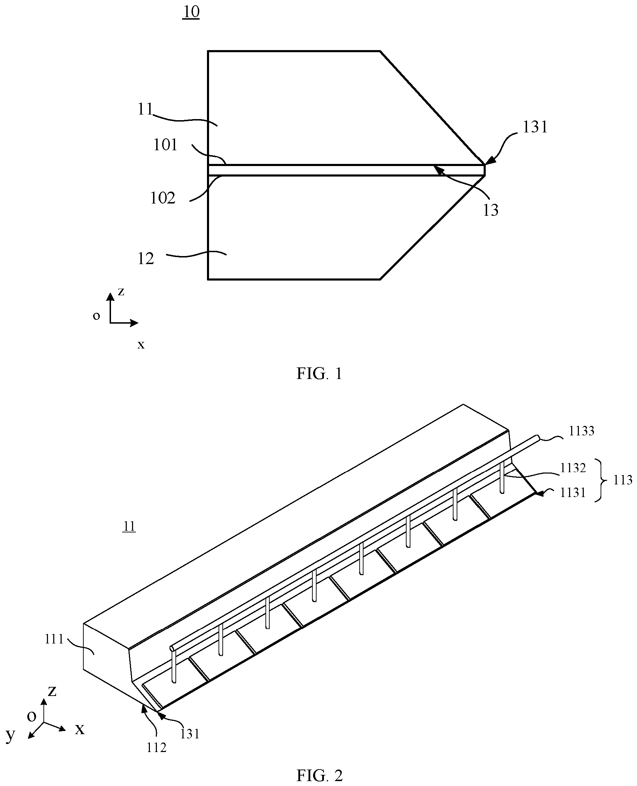

FIG. 1 is a schematic diagram of a coating die according to an embodiment of the present application, and FIG. 2 is a schematic diagram of a first die according to an embodiment of the present application. In an embodiment of the present application, as shown in FIGS. 1 and 2, the coating die 10 includes a first die 11 and a second die 12, and the first die 11 and the second die 12 are connected and enclose to form a slot 13 to output slurry.

The first die 11 and the second die 12 extend in a first direction, and the first direction is the width direction of the coated substrate, for example the y direction in FIG. 2.

A slot 13 is parallel to a second direction, and the second direction is the output direction of the slurry, such as the x direction in FIG. 1.

Optionally, the second direction is perpendicular to the first direction.

The first die 11 and the second die 12 are connected in a third direction, and the slot 13 is located between the first die 11 and the second die 12 in the third direction, the third direction is different from the first direction and the second direction.

For example, the third direction is perpendicular to a plane parallel to the second direction, such as the z direction in FIG. 1.

The first die 11 may be directly connected to the second die 12 or may be indirectly connected to the second die 12. For example, the coating die 10 may also include a gasket through which the first die 11 is connected to the second die 12, the gasket is located between the first die 11 and the second die 12 in the third direction, the first die 11, the gasket and the second die 12 form a slot 13.

The first die 11 has a first mating surface 101, and the second die 12 has a second mating surface 102. The first mating surface 101 is fitted with the second mating surface 102 to connect the first die 11 and the second die 12 and form the slot 13.

As shown in FIG. 2, the first die 11 includes a die body 111, a lip portion 112 and a lip adjustment assembly 113. The lip portion 112 is connected to the die body 111 and is located at a discharge end 131 of the slot 13. The lip adjustment assembly 113 is used for adjusting the temperature of the lip portion 112 to control the deformation of the lip portion 112.

The die body 111 is the main structure of the first die 11, and the lip portion 112 is connected to the die body 111 and is located at the discharge end 131 of the slot 13. Thus, the lip portion 112 protrudes from the die body 111 in the slurry output direction so that slurry is output at the lip portion 112.

Alternatively, the lip portion 112 and the die body 111 may be integrally formed.

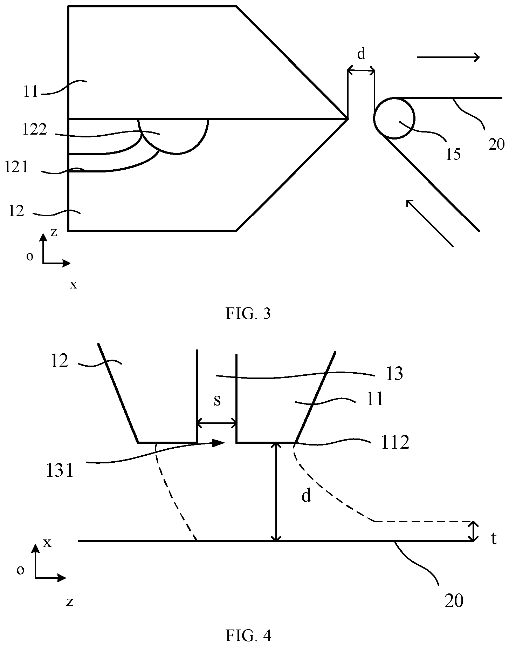

FIG. 3 is a schematic diagram of coating using the coating die according to an embodiment of the present application, and FIG. 4 is a schematic diagram of coating according to an embodiment of the present application. As shown in conjunction with FIGS. 3 and 4, the slurry output from the slot 13 is coated on the substrate 20, the x direction in the figures is the output direction of the slurry, and the width direction of the substrate 20 is a direction perpendicular to the paper surface.

The lip portion 112 is related to a width s of the slot 13 at the discharge end 131, the width s is the dimension of the discharge end 131 of the slot 13 in the second direction, or, in other words, the width s is the vertical distance between the first die 11 and the second die 12 at the discharge end 131. By adjusting the width s, the flow rate of slurry can be adjusted, whereby the consistency of coating can be adjusted.

A gap d between the lip portion 112 and the substrate 20 is related to the performance of the coating, and the gap d is proportional to a thickness t of the slurry coated on the substrate 20. That is, the greater the gap d between the lip portion 112 and the substrate 20, the greater the thickness t of the slurry applied on the substrate 20, and the greater the weight of the substrate 20 being coated. The smaller the gap d between the lip portion 112 and the substrate 20, the smaller the thickness t of the slurry coated on the substrate 20, and the smaller the weight of the substrate 20 being coated.

The gap d between the lip portion 112 and the substrate 20 may be a vertical distance between the lip portion 112 and the substrate 20.

The lip adjustment assembly 113 is used for adjusting the temperature of the lip portion 112. When the temperature of the lip portion 112 changes, the lip portion 112 will deform accordingly, i.e., expand or contract. For example, in the case where the lip portion 112 is made of a metal material, when the temperature of the lip portion 112 rises, the lip portion 112 expands in all directions. For example, the lip portion 112 expands in a direction close to the substrate 20 so that the distance d between the lip portion 112 and the substrate 20 becomes smaller. Thus, it is possible to adjust the distance between the lip portion 112 and the substrate 20 by controlling the lip portion 112 to undergo deformation, thereby adjusting the thickness and weight of the coating. For another example, the lip portion 112 may also expand in a direction close to the second die 12 so that the width s of the slot 13 at the discharge end 131 becomes smaller so that the flow rate of the slurry can be adjusted and thus the consistency of the coating can be adjusted.

The substrate 20 may be a current collector such as copper foil, aluminum foil, composite metal or other materials. In the case of a current collector, the slurry formed by electrode active material is coated on a surface of current collector, and the film formed after drying can be used as a battery plate. Electrode active material is divided into positive active material and negative active material. The positive active material can be lithium cobaltate, lithium iron phosphate, ternary lithium or lithium manganate, while the negative active material can be carbon or silicon.

The slurry may include an active agent, a binder, a conductive agent, and the like.

The lip portion 112 is made of a thermally expanding and contracting material, for example, the lip portion 112 is made of a metal material. The magnitude of the deformation of the lip portion 112 is related to the material of the lip portion 112 itself and can be determined according to the expansion coefficient of the material.

Alternatively, the second die 12 is provided with a lip adjustment assembly 113, the lip adjustment assembly 113 is used for adjusting the temperature of the lip portion of the second die 12 to control deformation of the lip portion of the second die 12.

In an embodiment of the present application, the coating die 10 includes a first die 11 and a second die 12, the first die 11 and the second die 12 are connected and enclose to form a slot 13 for outputting slurry. The first die 11 includes a die body 111, a lip portion 112 and a lip adjustment assembly 113, the lip portion 112 is connected to the die body 111 and is located at a discharge end 131 of the slot 13, and the lip adjustment assembly 113 is used for adjusting the temperature of the lip portion 112 to control the deformation of the lip portion 112. When the temperature of the lip portion 112 changes, the lip portion 112 may expand or contract, so that the lip portion 112 is deformable. In the coating process using the coating die 10, the temperature of the lip portion 112 can be adjusted by the lip adjustment assembly 113 to control the deformation of the lip portion 112, thereby adjusting the distance between the lip portion 112 and the coated substrate 20. The distance between the lip portion 112 and the coated substrate 20 is related to the weight and thickness of the coating. The weight and thickness of the coating can be adjusted by adjusting a distance between the lip portion 112 and the substrate 20, which is beneficial to improving the consistency of the coating.

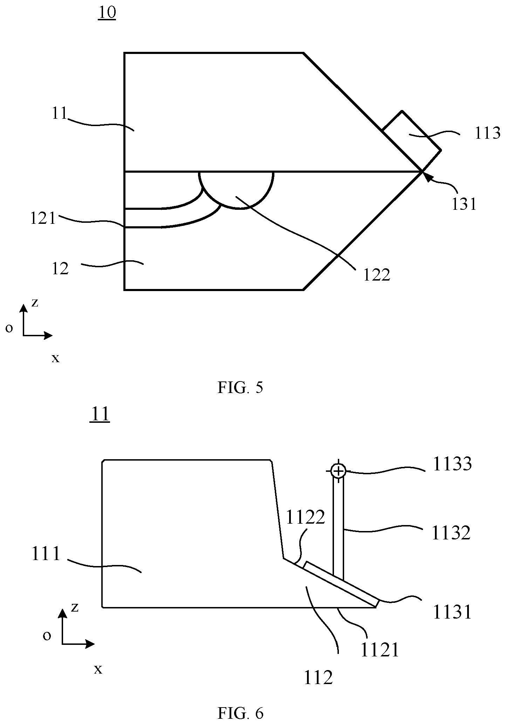

FIG. 5 is a schematic diagram of a coating die according to an embodiment of the present application. Alternatively, as shown in FIG. 5, the coating die 10 further includes a feed chamber 121 and a storage chamber 122. The slurry enters the coating die 10 through the feed chamber 121, then flows to the storage chamber 122, and can then enter the slot 13 via the storage chamber 122 to be output from the discharge end 131.

The feed chamber 121 and the storage chamber 122 may be provided on the second die 12 or on the first die 11, and may be specifically provided according to actual needs, which is not specifically limited in the present application.

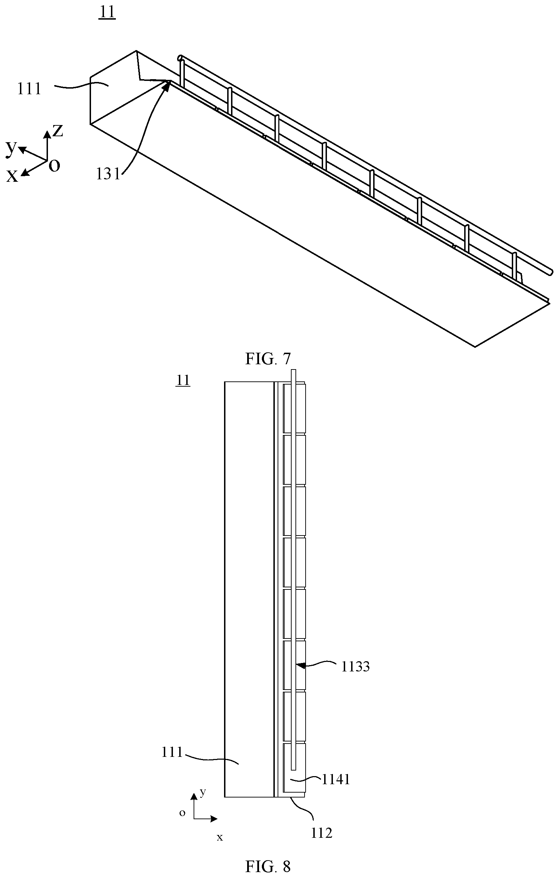

FIG. 6 is a side view of the first die according to an embodiment of the present application, and FIG. 7 is a schematic diagram of the first die according to an embodiment of the present application. In an embodiment of the present application, as shown in conjunction with FIGS. 2, 6 and 7, the lip adjustment assembly 113 includes a temperature control element 1131, and the temperature control element 1131 is disposed on the surface of the lip portion 112 and used for adjusting the temperature of the lip portion 112.

The lip portion 112 includes a first surface 1121 and a second surface 1122. The first surface 1121 is a portion of the first mating surface 101, and the first surface 1121 is used to define the slot 13. The second surface 1122 and the first surface 1121 are arranged obliquely, and an included angle between the first and second surfaces is an acute angle, and the second surface 1122 is in contact with the external environment.

Alternatively, the temperature control element 1131 is disposed on the second surface 1122 of the lip portion 112, this facilities mounting of the temperature control element 1131.

Alternatively, a cavity is provided inside the lip portion 112, and the temperature control element 1131 is provided in the cavity.

In this embodiment, the temperature control element 1131 is provided on the surface of the lip portion 112, so that the temperature of the lip portion 112 is easily adjusted by the temperature control element 1131 to control deformation of the lip portion 112. Compared with manually adjusting the deformation of the lip portion 112 through the screw assembly, this implementation is beneficial to improve the automation and the deformation accuracy of lip portion 112.

Alternatively, the temperature control element 1131 is an integral element, i.e., one temperature control element 1131 is provided, which covers the second surface 1122 of the lip portion 112. In this way, the installation of the temperature control element 1131 is convenient, which is beneficial to reduce the installation difficulty.

FIG. 8 is a top view of the first die according to an embodiment of the present application. In an embodiment of the present application, as shown in FIG. 2 and FIG. 8, the temperature control element 1131 includes a plurality of temperature control units 1141 arranged in a first direction, the plurality of temperature control units 1141 are used for adjusting the temperatures of a plurality of areas of the lip portion 112, the first direction is the width direction of the substrate 20 being coated.

For example, when the deformation of a certain area of the lip portion 112 does not coincide with the deformation of other areas during use, the deformation of the certain area of the lip portion 112 can be adjusted by adjusting the temperature control element 1141 provided in the area. For another example, when a certain temperature control unit 1141 fails, the temperature control unit 1141 can be replaced without replacing the entire temperature control element 1131, thereby facilitating maintenance.

In this embodiment, by arranging a plurality of temperature control units 1141, the temperature of a specific area of the lip portion 112 can be flexibly adjusted as required, so as to control the deformation of the specific area of the lip portion 112. In addition, it is also beneficial to the maintenance and replacement of temperature control element 1131.

Alternatively, the lip portion 112 is a continuous structure, i.e., one lip portion 112 of the first die 11 is provided. In this case, the deformation of the corresponding area of the lip portion 112 can be adjusted by adjusting the temperature control unit 1141 provided corresponding to the lip portion 112. Compared with the case that the lip portion 112 is provided as a plurality of portions, the lip portion 112 being provided as a continuous structure avoids material leakage during coating.

Alternatively, the temperature control element 1131 is provided on the lip portion 112 by bonding.

In an embodiment of the present application, the temperature control element 1131 is a semiconductor temperature control element.

The semiconductor temperature control element has a short heating and cooling response time and has high adjustment accuracy for quickly and accurately controlling the deformation of lip portion.

When the temperature of the lip portion 112 is adjusted using the semiconductor temperature control element, the current of the semiconductor temperature control element may be changed based on a Proportion-Integral-Derivative (PID) algorithm to control the temperature of the semiconductor temperature control element.

For example, a current commutation module is arranged in the semiconductor temperature control element, and the current commutation module can be controlled to change the current direction in the semiconductor temperature control element, thereby achieving the temperature control of the semiconductor temperature control element. For example, the semiconductor temperature control element is a Thermo Electric Cooler (TEC).

For another example, the semiconductor temperature control element is provided with an N-type element and a P-type element. By controlling the direction of current, for example, changing the direction of current flowing from the N-type element to the P-type element to the direction of current flowing from the P-type element to the N-type element, the heating condition of the semiconductor temperature control element can be changed from temperature reduction to temperature rise or from temperature rise to temperature reduction.

In an embodiment of the present application, the lip adjustment assembly 113 further includes a temperature measurement sensor 1132, the temperature measurement sensor 1132 is connected to the temperature control element 113 to measure the temperature of the temperature control element 113.

Alternatively, the temperature measurement sensor 1132 is a temperature measurement probe, and the temperature measurement probe is provided on the surface of the temperature control element 1131 to measure the temperature of the temperature control element 113.

Alternatively, the temperature measurement sensor 1132 is disposed inside the temperature control element 1131.

In this embodiment, it is convenient to determine whether the temperature control element 1131 should be warmed up or cooled down based on the temperature of the temperature control element 1131 as measured by the temperature measurement sensor 1132.

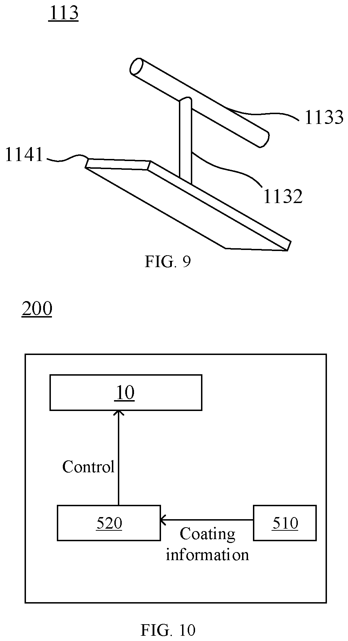

FIG. 9 is a schematic diagram of a lip adjustment assembly according to an embodiment of the present application. Alternatively, in an embodiment, FIG. 9 illustrates a minimum unit of the lip adjustment assembly 113, the minimum unit of the lip adjustment assembly 113 includes a temperature control unit 1141 and a temperature measurement sensor 1132. The temperature measurement sensor 1132 may send the measured temperature to the control unit through a harness assembly 1133, and the control unit controls the temperature control unit 1141 to be warmed up or cooled down according to the measured temperature. The harness assembly 1133 may be a part of the control unit.

Alternatively, the lip adjustment assembly 113 includes the harness assembly 1133, that is, the harness assembly 1133 is a part of the lip adjustment assembly 113.

Alternatively, the control unit may be a controller of the lip adjustment assembly 113 or a controller of a coating device including a coating die.

Embodiments of the coating die of the present application have been described in detail above with reference to FIGS. 1 to 9, and embodiments of the coating device and the coating method of the present application will be described in detail below. Similar descriptions of the embodiments of the coating die and the embodiments of the coating device and the coating method may be referred to the description of the embodiments of the coating die and will not be repeated herein.

FIG. 10 is a schematic diagram of the coating device according to an embodiment of the present application. As shown in FIG. 10, the present application provides a coating device 200 including any of the possible coating die 10 as described above, a coating measurement unit 510 and a control unit 520. The coating measurement unit 510 measures coating information of a coated area of the coated substrate 20 and transmits the coating information to the control unit 520. The control unit 520 controls the lip adjustment assembly 113 to adjust the temperature of the lip portion 112 according to the coating information.

The coating measurement unit 510 may be a thickness gauge, a weight gauge, an area density gauge or the like.

The control unit 520 may be a programmable controller.

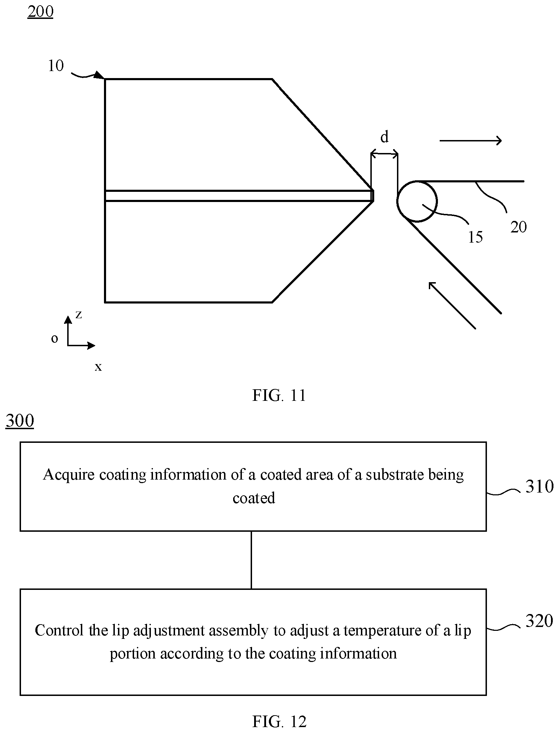

FIG. 11 is a schematic diagram of the coating device according to an embodiment of the present application. As shown in FIG. 11, in an embodiment of the present application, the coating device 200 further includes a back roller 15, the back roller 15 is used for supporting the substrate 20 for coating the substrate 20 by the coating die 10. The control unit 520 is further configured to: control, under a condition that the coating information is less than first preset information, the lip adjustment assembly 113 to cool the lip portion 112, so that the lip portion 112 contracts to increase a gap between the lip portion 112 and the back roller 15; and control, under a condition that the coating information is greater than the first preset information, the lip adjustment assembly 113 to heat the lip portion 112, so that the lip portion 112 expands to reduce the gap between the lip portion 112 and the back roller 15.

In an embodiment of the present application, the lip adjustment assembly 113 includes a temperature control element 1131, and the temperature control element 1131 is disposed on the surface of the lip portion 112 and used for adjusting the temperature of the lip portion 112. The control unit 520 is further configured to control the temperature control element 1131 to adjust the temperature of the lip portion 112 according to the coating information.

In an embodiment of the present application, the temperature control element 113 includes a plurality of temperature control units 1141 arranged in a first direction, the plurality of temperature control units 1141 are used for adjusting the temperatures of a plurality of areas of the lip portion 112, the first direction is the width direction of the substrate 20 being coated. The control unit 520 is further configured to control a first temperature control unit of a plurality of temperature control units 1141 to adjust a temperature of a first area of a plurality of areas of the lip portion 112 according to the coating information.

In an embodiment of the present application, the temperature control element 1131 is a semiconductor temperature control element. The control unit 520 is further configured to adjust the current of the semiconductor temperature control element according to the coating information, so as to adjust the temperature of the lip portion 112.

In an embodiment of the present application, the lip adjustment assembly 113 further includes a temperature measurement sensor 1132, the temperature measurement sensor 1132 is connected to the temperature control element 1131 to measure the temperature of the temperature control element 1131 and transmits the temperature of the temperature control element 1131 to the control unit 520. The control unit 520 is further configured to acquire the temperature of the temperature control element 1131 prior to controlling the lip adjustment assembly 113 to adjust the temperature of the lip portion 112 according to the coating information.

In an embodiment of the present application, the coating information includes at least one of a coating thickness, a coating width, and a coating weight of the coated area.

FIG. 12 is a schematic diagram of a coating method according to an embodiment of the present application. As shown in FIG. 12, the embodiments of the present application provide a coating method 300, which is applied to a coating device 200. The coating method 300 includes the following steps.

The coating method 300 may be executed by a control unit in the coating device 200.

Step 310, the coating information of the coated area of the coated substrate 20 is acquired.

Step 320, the lip adjustment assembly 113 is controlled to adjust the temperature of the lip portion 112 according to the coating information.

By Step 320, the current coating can be automatically adjusted according to the coating information of the coated area.

In this embodiment, the thickness, width and consistency of the coating can be determined according to the coating information of the coated area, so that the lip adjustment assembly 113 can be controlled to adjust the temperature of the lip portion 112 according to the coating information, so as to control the deformation of the lip portion 112.

In an embodiment of the present application, Step 320 includes: controlling, under a condition that the coating information is less than first preset information, the lip adjustment assembly 113 to cool the lip portion 112, so that the lip portion 112 contracts to increase a gap d between the lip portion 112 and the back roller 15; and controlling, under a condition that the coating information is greater than the first preset information, the lip adjustment assembly 113 to heat the lip portion 112, so that the lip portion 112 expands to reduce the gap d between the lip portion 112 and the back roller 15.

In this embodiment, the coating device 200 further includes a back roller 15, the back roller 15 configured to support substrate 20 for coating the substrate 20 on the coating die 10.

The back roller 15 is used for supporting and conveying the substrate 20, so long as it can achieve the conveying and supporting of the substrate 20, while the shape, material and size of the back roller 15 are not specifically limited in the present application.

In this embodiment, the lip portion 112 expands when the temperature rises and contracts when the temperature decreases.

The first preset information is preset information related to the coating, such as the thickness and width of the coating, the weight of the coating, the area density of the substrate being coated, and the like. The first preset information may be set in advance and stored in the control unit 520 or a memory of the coating device 200.

The coating information and the first preset information are similar information, for example, both indicate the thickness of the coating.

In this embodiment, by comparing the coating information with the first preset information, the condition of the coating can be determined so as to facilitate timely adjustment of the coating strategy, for example, adjusting the gap between the coating die 10 and the back roller 15.

In an embodiment of the present application, step 320 includes controlling the temperature control element 1131 to adjust the temperature of the lip portion 112 according to the coating information.

The lip adjustment assembly 113 includes a temperature control element 1131, and the temperature control element 1131 is disposed on the surface of the lip portion 112 and used for adjusting the temperature of the lip portion 112.

Thus, the temperature of the lip portion 112 is easily adjusted through the temperature control element 1131 according to the coating information, which is beneficial to improving automation.

In an embodiment of the present application, step 320 includes controlling a first temperature control unit of a plurality of temperature control units 1141 to adjust a temperature of a first area of a plurality of areas of the lip portion 112 according to the coating information.

The temperature control element 1131 includes a plurality of temperature control units 1141 arranged in a first direction, the plurality of temperature control units 1141 are used for adjusting the temperatures of a plurality of areas of the lip portion 112, the first direction is the width direction of the substrate 20 being coated.

A first temperature control unit is provided in a first area of the lip portion 112, the first temperature control unit is any one of a plurality of temperature control units 1141.

In this embodiment, the temperature of a certain area of the lip portion 112 can be flexibly adjusted by the temperature control unit 1141, thereby achieving the deformation of the certain area of the lip portion 112.

In an embodiment of the present application, the temperature control element 1131 is a semiconductor temperature control element. Step 320 includes adjusting the current of the semiconductor temperature control element according to the coating information, so as to adjust the temperature of the lip portion 112.

The semiconductor temperature control element has a short heating and cooling response time and has high adjustment accuracy, at about 0.1°C, for quickly and accurately controlling the deformation of the lip portion. In addition, the semiconductor temperature control element has a large temperature adjustment range of -60°C to 300°C, which can take into account the adjustment range and adjustment accuracy.

Alternatively, the temperature control element 1131 may also be a resistor or a thermocouple.

Alternatively, in Step 320, it is possible to determine whether it is necessary to control deformation of the lip portion 112 according to the coating information and the first preset information. For example, according to a difference between the first preset information and the coating information, the value of the deformation required to occur in the lip portion 112 is calculated, and thereafter, a temperature T1 required to be adjusted by the temperature control element is calculated based on the value of the deformation. The value of the deformation of the lip portion 112 is related to the expansion coefficient of the material of the lip portion 112.

In a case where the coating information of the coated area is less than the first preset information, for example, the coating thickness of the coated area is smaller than the preset coating thickness, it is necessary to control the lip portion 112 to contract to increase the gap between the lip portion 112 and the back roller 15. At this time, it is necessary to control the temperature control element 1131 to reduce the temperature from the current temperature T0 by a reduced temperature value of T1 in order to cause the lip portion 112 to contract.

Similarly, in a case where the coating information of the coated area is greater than the first preset information, for example, the coating thickness of the coated area is greater than the preset coating thickness, it is necessary to control the lip portion 112 to expand to reduce the gap between the lip portion 112 and the back roller 15. At this time, it is necessary to control the temperature control element 1131 to raise the temperature from the current temperature T0 by a raised temperature value of T1 in order to cause the lip portion 112 expand.

In an embodiment of the present application, prior to Step 320, the method 300 further includes acquiring the temperature of the temperature control element 1131.

The lip adjustment assembly 113 also includes a temperature measurement sensor 1132, the temperature measurement sensor 1132 is connected to the temperature control element 1131 to measure the temperature of the temperature control element 1131 and transmit the temperature value to the control unit 520.

In this embodiment, the temperature of the temperature control element 1131 is acquired before step 320, so that the control unit 520 controls the temperature control element 1131 to be warmed up or cooled down according to the current temperature T0 of the temperature control element 1131 and the target temperature T1.

Alternatively, in the method 300, the temperature of the temperature control element 1131 can be acquired in real time so as to determine in time whether or not the temperature of the temperature control element 1131 satisfies the requirement for corresponding deformation of the lip portion 112.

In an embodiment of the present application, the coating information includes at least one of a coating thickness, a coating width, and a coating weight of the coated area. This facilitates the measurement of the coating information by the measuring device, thereby facilitating the acquisition of the coating information.

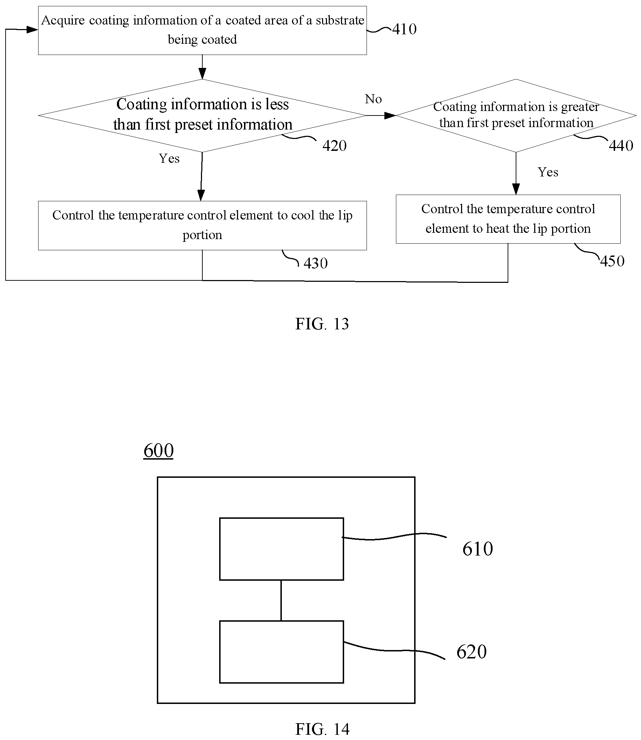

FIG. 13 is a flowchart of the coating method according to an embodiment of the present application. As shown in FIG. 13, the coating method includes the following steps.

Step 410, the coating information of the coated area of the coated substrate is acquired.

Step 420, whether the coating information is less than the first preset information is determined.

If the coating information is less than the first preset information, step 430 is performed. In a case where the coating information is not less than the first preset information, step 440 is performed.

In step 430, the temperature control element 1131 is controlled to cool the lip portion 112.

Following the step 420 and before the step 430, a specific temperature value to which the temperature control element 1131 is cooled down may be calculated according to the difference between the coating information and the first preset information.

In step 430, the temperature control element 1131 is controlled to cool down the lip portion 112, so that the temperature of the lip portion 112 is lowered and the lip portion 112 contracts, thereby increasing the gap between the lip portion 112 and the back roller 15 and increasing the thickness of the coating.

In step 440, whether the coating information is greater than the first preset information is determined.

In a case where the coating information is greater than the first preset information, step 450 is performed.

In step 450, the temperature control element 1131 is controlled to warm up the lip portion 112.

Following the step 440 and prior to the step 450, a specific temperature value to which the temperature control element 1131 is warmed up may be calculated according to the difference between the coating information and the first preset information.

In step 450, the temperature control element 1131 is controlled to cool down the lip portion 112, so that the temperature of the lip portion 112 is raised and the lip portion 112 expands, thereby reducing the gap between the lip portion 112 and the back roller 15 and reducing the thickness of the coating.

In the coating method, step 420 and step 440 may be performed simultaneously, and step 420 may be performed first or step 440 may be performed first.

Following step 430 or step 450, the method proceeds to return to step 410. In this way, the coating thickness can be monitored and adjusted in real time, which is convenient for adjusting the coating strategy in time and is beneficial to improving the coating consistency.

FIG. 14 is a schematic diagram of the coating device according to an embodiment of the present application. As shown in FIG. 14, embodiments of the present application provide a coating device 600 including a memory 610 for storing computer-executable instructions; a processor 620 for accessing the memory 610 and executing the computer-executable instructions to perform operations in the coating method according to any of the foregoing embodiments.

The processor 620 of the embodiments of the present application may be an integrated circuit chip having signal processing capability. In implementation, the steps of the above method embodiments may be accomplished by integrated logic circuitry of hardware in the processor or instructions in the form of software. The processor may be a general purpose processor, a Digital Signal Processor (DSP), an Application Specific Integrated Circuit (ASIC), a Field Programmable Gate Array (FPGA) or other programmable logic devices, discrete gates or transistor logic devices, or discrete hardware components. The methods and steps disclosed in the embodiments of the present application may be implemented or executed. The general-purpose processor may be a microprocessor or may also be any conventional processor, and so on. The steps of the method disclosed in combination with the embodiment of the present application can be directly embodied as being executed by hardware of a decoding processor or being executed by a combination of hardware and software modules in the decoding processor. The software modules may be located in a mature storage medium of the field, such as RAM, flash memory, ROM, a programmable ROM or an erasable programmable memory and a register. The storage medium is located in the memory, and the processor reads the information in the memory and completes the steps of the method in combination with its hardware.

The memory 610 of the embodiments of the present application may be a volatile memory or a non-volatile memory, or may include both volatile and non-volatile memory. The non-volatile memory may be a Read-Only Memory (ROM), a Programmable Read-Only Memory (PROM), an Erasable Programmable Read-Only Memory (EPROM), an Electrically Erasable Programmable Read-Only Memory (EEPROM), or a flash memory. The volatile memory may be a Random Access Memory (RAM) which serves as an external cache. By way of illustration, but not limitation, many forms of RAM are available, such as a Static Random Access Memory (SRAM), a Dynamic Random Access Memory (DRAM), a Synchronous Dynamic Random Access Memory (SDRAM), a Double Data Rate Synchronous Dynamic Random Access Memory (DDR SDRAM), an Enhanced Synchronous Dynamic Random Access Memory (ESDRAM), a Synchlink Dynamic Random Access Memory (SLDRAM), and a Direct Rambus Random Access Memory (DR RAM). It should be noted that the memory of the systems and methods described herein is intended to include but not limited to these and any other suitable types of memory.

Embodiments of the present application provide a storage medium for storing a computer program which, when being executed by a computing device, causes the computing device to implement the coating method of any of the preceding embodiments.

Although the present application has been described with reference to preferred embodiments, various modifications may be made thereto and components therein may be replaced with equivalents without departing from the scope of the present application. Most of all, on the premise of no structural conflict, the technical features mentioned in the embodiments can be combined in any way. The present application is not restricted to particular embodiments disclosed herein but includes all technical solutions falling in the scope of the claims.

## Claims

1. A coating die (10), comprising:
a first die (11) and a second die (12), the first die (11) and the second die (12) being connected and enclosing to form a slot (13) to output slurry;
wherein the first die (11) comprises a die body (111), a lip portion (112) and a lip adjustment assembly (113);
wherein the lip portion (112) is connected to the die body (111) and is located at a discharge end (131) of the slot (13); and
the lip adjustment assembly (113) is configured to adjust a temperature of the lip portion (112) to control a deformation of the lip portion (112).

2. The coating die (10) according to claim 1, wherein the lip adjustment assembly (113) comprises a temperature control element (1131), the temperature control element (1131) being disposed on a surface of the lip portion (112) and configured to adjust the temperature of the lip portion (112).

3. The coating die (10) according to claim 2, wherein the temperature control element (1131) comprises a plurality of temperature control units (1141) arranged in a first direction, the plurality of temperature control units (1141) are configured to adjust temperatures of a plurality of areas of the lip portion (112), and the first direction is a width direction of a substrate (20) being coated.

4. The coating die (10) according to claim 2 or 3, wherein the temperature control element (1131) is a semiconductor temperature control element.

5. The coating die (10) according to any one of claims 2-4, wherein the lip adjustment assembly (113) further comprises a temperature measurement sensor (1132), the temperature measurement sensor (1132) being connected to the temperature control element (1131) to measure a temperature of the temperature control element (1131).

6. A coating device (200), comprising: the coating die (10) according to claim 1, a coating measurement unit (510) and a control unit (520);
wherein the coating measurement unit (510) is configured to measure coating information of a coated area of the substrate (20) being coated and send the coating information to the control unit (520); and
wherein the control unit (520) is configured to control the lip adjustment assembly (113) to adjust a temperature of the lip portion (112) according to the coating information.

7. The coating device (200) according to claim 6, wherein the coating device (200) further comprises a back roller (15), the back roller (15) being configured to support the substrate (20) for coating the substrate (20) by the coating die (10);
wherein the control unit (520) is further configured to:
control, under a condition that the coating information is less than first preset information, the lip adjustment assembly (113) to cool the lip portion (112), so that the lip portion (112) contracts to increase a gap between the lip portion (112) and the back roller (15); and
control, under a condition that the coating information is greater than the first preset information, the lip adjustment assembly (113) to heat the lip portion (112), so that the lip portion (112) expands to reduce the gap between the lip portion (112) and the back roller (15).

8. A coating method (300), wherein the method is applied to a coating device (200), the coating device (200) comprising the coating die (10) according to claim 1, and the method comprises:
acquiring coating information of a coated area of the substrate (20) being coated; and
controlling the lip adjustment assembly (113) to adjust a temperature of the lip portion (112) according to the coating information.

9. The coating method (300) according to claim 8, wherein the controlling the lip adjustment assembly (113) to adjust a temperature of the lip portion (112) according to the coating information comprises:
controlling, under a condition that the coating information is less than first preset information, the lip adjustment assembly (113) to cool the lip portion (112), so that the lip portion (112) contracts to increase a gap between the lip portion (112) and a back roller (15) supporting the substrate (20); and
controlling, under a condition that the coating information is greater than the first preset information, the lip adjustment assembly (113) to heat the lip portion (112), so that the lip portion (112) expands to reduce the gap between the lip portion (112) and the back roller (15).

10. The coating method (300) according to claim 8 or 9, wherein the controlling the lip adjustment assembly (113) to adjust a temperature of the lip portion (112) according to the coating information comprises:
controlling a temperature control element (1131) of the lip adjustment assembly (113) to adjust the temperature of the lip portion (112) according to the coating information.

11. The coating method (300) according to claim 10, wherein the controlling the lip adjustment assembly (113) to adjust a temperature of the lip portion (112) according to the coating information comprises:
controlling a first temperature control unit (1141) of a plurality of temperature control units (1141) of the temperature control element (1131) to adjust a temperature of a first area of a plurality of areas of the lip portion (112) according to the coating information, the plurality of temperature control units (1141) being arranged in a first direction, the first direction being a width direction of the substrate (20) being coated.

12. The coating method (300) according to claim 10 or 11, wherein the temperature control element (1131) is a semiconductor temperature control element; and
the controlling the lip adjustment assembly (113) to adjust a temperature of the lip portion (112) according to the coating information comprises:
adjusting a current of the semiconductor temperature control element based on a proportion-integral-derivative algorithm according to the coating information, so as to adjust the temperature of the lip portion (112).

13. The coating method (300) according to any one of claims 10-12, wherein, before the controlling the lip adjustment assembly (113) to adjust a temperature of the lip portion (112) according to the coating information, the method further comprises:
acquiring a temperature of the temperature control element (1131).

14. The coating method (300) according to any one of claims 8-13, wherein the coating information comprises at least one of a coating thickness, a coating width and a coating weight of the coated area.
